# EUROPÄISCHE PATENTSCHRIFT

(11) **EP 3 407 090 B1**
(45) Veröffentlichungstag und Bekanntmachung des Hinweises auf die Patenterteilung: **03.05.2023**
(21) Anmeldenummer: 18173547.3
(22) Anmeldetag: 22.05.2018
(51) Int. Cl.: G06V 20/64, G01S 17/89

(54) **VERFAHREN ZUR ERFASSUNG UND AUTONOMER VERFOLGUNG EINES ZIELOBJEKTS MITTELS EINES LIDAR-SENSORS**
METHOD FOR DETECTING AND AUTONOMOUS TRACKING OF A TARGET OBJECT BY MEANS OF A LIDAR SENSOR
PROCÉDÉ DE DÉTECTION ET DE SUIVI D'UN OBJET CIBLE INDÉPENDANT AU MOYEN D'UN CAPTEUR LIDAR

(30) Priorität: 24.05.2017 DE 102017111351
(43) Veröffentlichungstag der Anmeldung: 28.11.2018
(73) Patentinhaber: Jena Optronik GmbH, 07745 Jena (DE)
(72) Erfinder: Schmitt, Christoph, 07743 Jena (DE); Kolb, Florian, 07747 Jena (DE)
(74) Vertreter: Ege Lee & Roider Patentanwälte

(56) Entgegenhaltungen:
- DE-A1-102014 005 181
- US-A1- 2014 118 716
- RUEL S ET AL: "Target Localization from 3D data for On-Orbit Autonomous Rendezvous & Docking", 2008 IEEE AEROSPACE CONFERENCE; 1-8 MARCH 2008; BIG SKY; MT, USA, IEEE, PISCATAWAY, NJ, USA, 1. März 2008 (2008-03-01), Seiten 1-11, XP031256386, ISBN: 978-1-4244-1487-1

## Beschreibung

Die Erfindung betrifft ein Verfahren zur Erfassung und autonomen Verfolgung eines Zielobjekts, insbesondere eines nicht kooperativen Raumflugkörpers mittels eines LIDAR-Sensors, wobei der LIDAR-Sensor auf das Zielobjekt über einen vorgegebenen Flächenbereich laufend Laserpulse aussendet und aus von den Zielobjekten reflektierten Messpunkten in vorgegebenen Zeitabständen eine 3D-Punktwolke generiert und eine aktuelle relative Lage des Zielobjekts gegenüber dem LIDAR-Sensor in den vorgegebenen Zeitabständen anhand von die Position abschätzenden Algorithmen für sechs Bewegungsfreiheitsgrade des Zielobjekts berechnet wird.

Für die Relativnavigation zwischen Raumfahrzeugen mittels eines 3D-LIDAR-Systems, beispielsweise eines LIDAR-Sensors, sind die Erfassung und autonome Verfolgung ("Tracking") des eines Zielobjekts ("Target") essenziell. Der LIDAR-Sensor muss hierbei in der Lage sein, ein Zielobjekt aus beispielsweise mehreren Kilometern Entfernung zu erkennen und dessen Position zu verfolgen. Für Szenarien mit nicht-kooperativen Targets, wie beispielsweise Servicing- oder De-Orbit-Missionen, stehen markante Erkennungselemente wie beispielsweise Retroreflektoren nicht zur Verfügung. Der LIDAR-Sensor generiert somit Punktwolken, die mittels eines geeigneten Verfahrens hinsichtlich der relativen Position ausgewertet werden müssen. Eine simple Mittelwert-Bildung erweist sich hierbei als potentiell sehr ungenau. Aufgrund des Vorhandenseins von unterschiedlichsten Materialien in der Raumfahrt mit stark variierenden Reflektivitäten und Abstrahlcharakteristika kann bei einem Überstreichen über ein Zielobjekt, beispielsweise einen geostationären Satelliten im Rahmen einer Servicing Mission mit Laserlicht und Auswertung der reflektierten Strahlung ("Scan") eine hochgradig ungleichmäßig verteilte Punktwolke entstehen. Die Mittelwert-Bildung kann somit zu starken Schwankungen führen. Die Größenordnung des Fehlers kann dabei theoretisch die Dimension des Zielobjekts erreichen und kann im Nahbereich durch das übergeordnete sogenannte GNC-System (System zur die Führung, Navigation und Steuerung eines den LIDAR-Sensor enthaltenden Raumflugkörpers, Guidance, Navigation & Control, GNC) nicht tolerierbar werden. Beim Scan über einen geostationären Satelliten mit einer Spannweite von 50m, könnte somit beispielsweise im Worst Case ein Fehler von bis zu 25 m entstehen. Bereits seit Mitte der 80er Jahre wurde die mathematische Grundlage geschaffen für moderne Pose Estimation Algorithmen. Diese sind in der Lage aus 3D-Punktwolken die relative Lage und Position eines Zielobjektes zu ermitteln. Aufgrund der Rauschcharakteristika eines 3D-LIDAR-Systems können diese jedoch erst bei nahen Entfernungen, beispielsweise unter 50 m eingesetzt werden.

Die Verwendung von LIDAR-Sensoren zur hochauflösenden Generierung von 3D-Punktwolken ist im terrestrischen Einsatz eine Standardmethode, beispielsweise zur Kartographie, Geographie, Archäologie, Vermessung. Im Raumfahrtbereich werden LIDAR-Sensoren zur Lage- und Entfernungsmessung, beispielsweise zur Lageregelung für Annäherung- und Andockvorgänge von Versorgungsraumschiffen an die Internationale Raumstation verwendet. Dabei basieren bereits bekannte LIDAR Tracking Algorithmen für den Fernbereich auf der Detektion markanter Erkennungselemente wie beispielsweise Retroreflektoren. Diese können aufgrund ihrer hohen rückreflektierten Amplituden eindeutig identifiziert werden. Bei Kenntnis der Konstellation von Reflektoren auf dem Target Objekt, kann daraus eine relative Positionsinformation auch aus mehreren Kilometern abgeleitet werden. Für Szenarien mit nicht-kooperativen Zielobjekten, das heißt Zielobjekten ohne entsprechende Erkennungselemente ist dieses Prinzip nicht anwendbar.

Für Andockvorgänge aus nächster Nähe kann eine Ermittlung der Position des Zielobjekts anhand von sogenannten Iterative Closest Point Algorithmen erfolgen, die durch ein iteratives Anpassungsverfahren ein mathematisches Referenzmodell an die von dem LIDAR-Sensor während laufend durchgeführter Scans erfasster 3D-Punktwolke anpassen. Die aufgeführten Algorithmen sind beispielsweise aus "Closed-form solution of absolute orientation using unit quaternions", Berthold K.P. Horn in Vol. 4, No. 4/April 1987/J. Opt. Soc. Am., Seiten 629 - 642 bekannt. Hierbei werden Algorithmen offenbart, bei denen für die Translation und Rotation zwischen zwei Punktwolken eine analytische Lösung auf Basis einer einfachen Eigenwertberechnung oder Singulärwertzerlegung ermittelt werden. Hierfür muss jedoch zunächst eine Korrespondenz zwischen den gescannten Punkten und dem Referenzmodell hergestellt werden. Das Referenzmodell wird hierbei aus einem CAD-Modell des Zielobjektes abgeleitet und ist je nach Anpassungsverfahren in Form von einfachen Punkten oder Flächenelementen parametrisiert. Je nach Berechnungsvorschrift werden dabei die korrespondierenden Punkte beispielweise über eine Minimierung der Punkt-zu-Punkt-Distanz oder eine Normal-Projektion auf die Referenz Flächen ermittelt. Anschließend erfolgt die Berechnung der Translation und Rotation. Dieser Prozess wird solange iteriert bis ein beispielsweise quadratisches Gütefunktional einen Schwellwert unterschreitet. Der Algorithmus konvergiert dabei von Iteration zu Iteration gegen die korrekte Lösung, da eine Anpassung kontinuierlich verbessert wird. Die Verwendung dieses Verfahrens ist jedoch durch das Rauschverhalten des LIDAR-Sensors limitiert und kann nur bis ca. 50 m Entfernung zum Zielobjekt zuverlässig eingesetzt werden.

Das Dokument DE 10 2014 005 181 A1 betrifft ein Verfahren zur Positions- und Lagebestimmung von unkooperativen Objekten, wie Raumfahrzeugen oder Satelliten. Dem Dokument DE 10 2014 005 181 A1 zufolge enthält eine 3D-Datenauswerteeinheit eine Modelldatenbank mit Modellwissen über ein Zielobjekt. Ein 3D-Sensor, beispielsweise LIDAR, akquiriert eine 3D-Punktwolke des Zielobjektes. Durch Vergleich einer so gewonnenen 3D-Datenpunkte und der Modellrepräsentation wird gemäß dem Dokument DE 10 2014 005 181 A1 zunächst eine initiale grobe Positions- und Lageschätzung vorgenommen. Anschließend wird die initiale Positions- und Lageschätzung unter ständiger Aktualisierung der 3D-Punktwolke verfeinert.

Das Dokument RUEL S ET AL: "Target Localization from 3D data for On-Orbit Autonomous Rendezvous & Docking", 2008 IEEE AEROSPACE CONFERENCE; 1-8 MARCH 2008; BIG SKY; MT, USA, IEEE, PISCATAWAY, NJ, USA, 1. März 2008 (2008-03-01), Seiten 1-11, XP031256386, ISBN: 978-1-4244-1487-1 erwähnt einen Tracking-Algorithmus, der ein Zielobjekt zusammen mit einer Punktwolke eines 3D-Sensors nutzt, um eine 6-DOF-Relativpose in Echtzeit zu berechnen. Die Form des Zielobjekts kann diesem Dokument zufolge auch direkt aus den Sensordaten generiert werden.

Das Dokument US 2014/118716 A1 betrifft ein Video und LIDAR Zielerfassungs- und - verfolgungssystem und -verfahren zur Segmentierung von Zielen. Dem Dokument US 2014/118716 A1 zufolge wird, nachdem ein Objekt verfolgt und über mehrere Frames segmentiert wurde, dessen 3D-Punktewolke eines jeden Frames in das auf das Objekt zentrierte Koordinatensystem des Objekts eingetragen, um eine Modellierung zu vereinfachen. Der Input für diesen Eintragungsschritt umfasst die in dem Segmentierungsschritt erzeugte Verfolgungsinformation, zusätzlich zu den aufbereiteten und korrigierten Punktdaten aus dem Aufbereitungsschritt.

Aufgabe der Erfindung ist, ein Verfahren vorzuschlagen, welches die Einsatzmöglichkeiten eines LIDAR-Sensors insbesondere zur Erkennung und autonomen Verfolgung von Zielobjekten im Weltraum auf größere Entfernungen ausdehnt.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Das vorgeschlagene Verfahren dient der Erfassung und autonomen Verfolgung eines Zielobjekts, insbesondere eines nicht kooperativen Raumflugkörpers mittels eines LIDAR-Sensors.

Hierbei sendet der LIDAR-Sensor auf das Zielobjekt über einen vorgegebenen Flächenbereich laufend Laserpulse aus. Aus von den Zielobjekten reflektierten Messpunkten wird in vorgegebenen Zeitabständen eine 3D-Punktwolke generiert und eine aktuelle relative Lage des Zielobjekts gegenüber dem LIDAR-Sensor in den vorgegebenen Zeitabständen anhand von die Position abschätzenden Algorithmen für sechs Bewegungsfreiheitsgrade des Zielobjekts berechnet. Um das Rauschverhalten des LIDAR-Sensors über größere Entfernungen zu kompensieren, wird in einem ersten Schritt eine hochauflösende, über mehrere vorgegebene Zeitabstände erfasste initialisierende Punktwolke erfasst. In einem zweiten Schritt wird aus der initialisierenden Punktwolke ein verrauschtes Referenzmodell mit einer geringen Anzahl von Messpunkten erzeugt und in nachfolgenden iterativen Schritten mit zu den gegebenen Zeitabständen zeitliche Positionswolken ermittelt und mit dem Referenzmodell anhand der Algorithmen verglichen und Lageinformationen des Zielobjekts berechnet, wobei das Referenzmodell laufend an die Änderungen der Punktwolken adaptiert wird.

Gemäß einer vorteilhaften Ausführungsform des Verfahrens wird der LIDAR-Sensor bei Entfernungen zum Zielobjekt größer 50 m angewendet.

In dem vorgeschlagenen Verfahren betragen die vorgegebenen Zeitabstände in bevorzugter Weise 0,5 Sekunden bis 1 Sekunde.

Gemäß einer vorteilhaften Ausführungsform des Verfahrens wird aus den bei unterschiedlichen Ansichten erfassten Punktwolken beziehungsweise den aus diesen adaptieren Referenzmodellen ein 3D-Modell des Zielobjekts ermittelt. Gemäß einer vorteilhaften Ausführungsform des Verfahrens kann das 3D-Modell des Zielobjekts mittels einer elliptischen Annäherung eines Raumflugkörpers mit dem LIDAR-Sensor an das Zielobjekt ermittelt werden. Mit anderen Worten verwendet das vorgeschlagene Verfahren ein sogenanntes Tracking-Verfahren basierend auf Erkenntnissen der Pose Estimation Algorithmen für die Erkennung eines Zielobjektes anhand von sechs Freiheitsgraden. Anstatt der Verwendung eines originalgetreuen CAD-Modells, welches gegebenenfalls durch fehlende Kenntnis eines nicht-kooperativen Zielobjekts nicht verfügbar ist beziehungsweise durch das starke Sensor-Rauschen bei größeren Entfernungen, beispielsweise größer als 50 m zu starken Schwankungen in der berechneten Lage führen kann, welche wiederum das Ergebnis der Positionsbestimmung negativ beeinflusst, wird ein verrauschtes Referenzmodell eingesetzt, welches darüber hinaus vom LIDAR-Sensor selbst während des Anfluges erstellt und kontinuierlich verbessert wird. Der LIDAR-Sensor "lernt" somit im Anflug die Kontur seines Zielobjektes und passt beispielsweise schnelle 1-2 Hz Tracking-Scans auf ein sich kontinuierlich verbesserndes Referenzmodell an.

Der Algorithmus wird zunächst durch einen langsamen und hochauflösenden Aquisition Scan des LIDAR-Sensors initialisiert. Dadurch wird zunächst ein erstes Referenzmodell des Zielobjektes aufgebaut. Im Hinblick auf die Rechengeschwindigkeit des in dem LIDAR-Sensor integrierten oder mit diesem verbundenen Rechners empfiehlt sich hier die Beschränkung des Referenzmodells auf eine vorgegebene feste Zahl von Punkten. Im nächsten Schritt werden nun schnelle Tracking Scans durchgeführt. Diese sind nun aufgrund der Scangeschwindigkeit deutlich ausgedünnt und können theoretisch aufgrund unterschiedlicher Materialien auf dem Zielobjekt stark ungleichmäßig verteilt sein. Die dabei generierten Punktwolken werden nun durch einen ICP Algorithmus auf Basis eines Punkt-zu-Punkt-Korrespondenzverfahrens angepasst und eine relative Lage und Position bestimmt. Da das Referenzmodell ebenfalls "rauschbehaftet" ist, zeigen erste Simulationsergebnisse eine deutlich bessere und schwankungsarme Lageschätzung. Dies resultiert wiederum in einer deutlich besseren Positionsschätzung im Vergleich zu einer einfachen Mittelwertbildung über die gescannte Punktwolke.

Das Referenzmodell wird nun auf Basis der gescannten neuen Punktwolke aktualisiert. Hierbei kann im Hinblick auf die Rechengeschwindigkeit direkt die zuvor berechnete Punkt-zu-Punkt Korrespondenz genutzt werden oder ein geeignetes Zuordnungsverfahren definiert werden, sodass eine gleichmäßige räumliche Verteilung der Punkte gewährleistet ist. Dieses Verfahren bietet gleich mehrere Vorteile. Zum einen erfolgt dabei über den gesamten Anflug hinweg eine kontinuierliche Verbesserung des Referenzmodells durch die zunehmende Genauigkeit des LIDAR-Sensors während des Anfluges. Das Referenzmodell wird somit intelligent an das Rauschverhalten des LIDAR-Sensors angepasst. Zum anderen erstellt der LIDAR-Sensor während des Anfluges ein nahezu 360°-Modell des Zielobjektes und verbessert dadurch kontinuierlich seine Performance. Dies resultiert dadurch, dass während des Anfluges eines den LIDAR-Sensor enthaltenden Raumflugkörpers (Chaser), welcher das Zielobjekt erfasst und verfolgt, an sein Zielobjekt, aus der wirkenden Newton'schen Mechanik bei der Bewegung eines Körpers um einen massereichen Zentralkörper, ellipsenförmige Anflugtrajektorien entstehen, bei denen das Zielobjekt je nach Missionskonzept um nahezu 360° umrundet wird (Hohmann Transfer Ellipsen). Es ist somit beispielsweise möglich, dass ein Zielobjekt, beispielsweise ein Satellit, zunächst nur von der Seite gesehen wird. Das mittels des Aquisition Scans erzeugte Referenzmodell generiert somit zunächst in der Positionsbestimmung einen Fehler im Bereich der Dimension des Ziels. Durch den ellipsenförmigen Anflug erstellt der LIDAR-Sensor jedoch automatisch ein nahezu 360°-Modell des Zielobjekts und verbessert dadurch kontinuierlich seine Genauigkeit in der Positionsbestimmung. Erste Simulationen zeigen hier bereits bei 1,5 km Entfernung zum Zielobjekt eine Genauigkeit bei der Positionsbestimmung aus schnellen 1-2 Hz Tracking-Scans im Bereich < 1m (3 sigma) unter der Annahme extrem rauschbehafteter Messwerte mit 1,5 m (3 sigma) Rauschen.

Das vorgeschlagene Verfahren kann alternativ zu dem Erfassen und autonomen Verfolgen von Raumfahrzeugen mittels eines LIDAR-Sensors im terrestrischen Bereich eingesetzt werden. Beispielsweise kann mittels der vorgeschlagenen Vorgehensweise das Verfahren als automatischer Abstandhalter zwischen zwei beabstandeten Fahrzeugen eingesetzt werden. Hierbei kann der LIDAR-Sensor um einen Filter erweitert beziehungsweise der auf Raumflugkörper abgestimmte Filter gegen einen derartigen Filter ausgetauscht werden, der im ersten Aquisition Scan die Geometrie eines vorausfahrenden Fahrzeugs, beispielsweise eines PKWs, LKWs oder Kraftrads an die erfasste Punktwolke anpasst. Darauffolgende Tracking-Scans können wiederum nach dem präsentierten Prinzip auf das Referenzmodell angepasst und für dessen kontinuierliche Verbesserung genutzt werden. Darüber hinaus zeigt das Verfahren auch potential für eher militärische Anwendungen wie beispielsweise bei der Erfassung und autonomen Verfolgung und/oder Annäherung eines beabstandeten Flugzeugs, beispielsweise zur Betankung eines Flugzeugs in der Luft und/oder zur Erkennung und dem Verfolgen von Zielobjekten beispielsweise in Flugabwehrgeschützen.

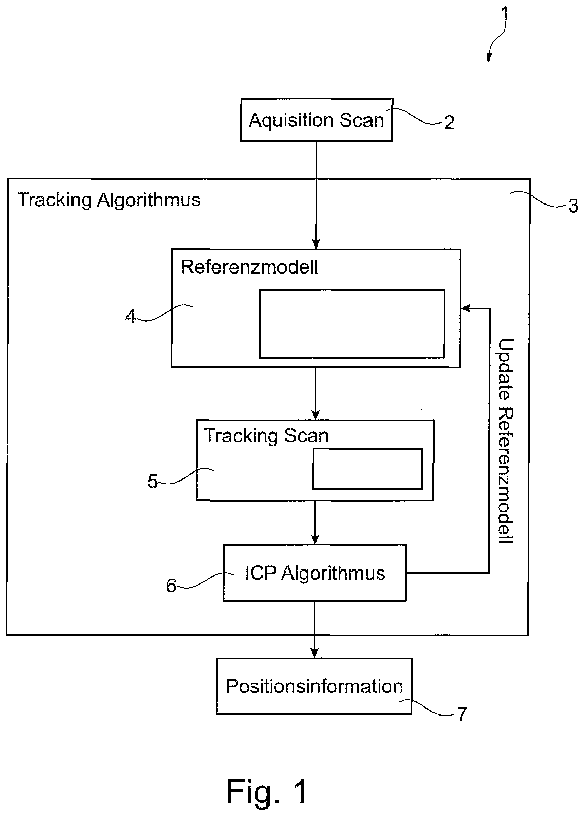

Die Erfindung wird anhand des in der einzigen Figur dargestellten Ausführungsbeispiels näher erläutert.

Die Figur zeigt das Blockschaltbild 1 des vorgeschlagenen Verfahrens zur Erfassung und Anpassung von mittels eines LIDAR-Sensors erfassten Punktwolken eines Zielobjekts. In einem ersten Schritt wird in Block 2 der sogenannte Aquisition Scan durchgeführt, bei dem eine möglichst hochwertige Punktwolke erzeugt wird. Beispielsweise kann der Aquisition Scan aus mehreren in einem vorgegebenen Zeitraster von 1 - 2 Hz folgenden und übereinander gelegten Tracking Scans gewonnen werden. Die erfassten Daten beispielsweise die Punktwolke des Aquisition Scans dient als initiierender Datensatz zu Beginn einer Zielerfassung eines Zielobjekts und wird in den Block 3, den sogenannten Tracking Algorithmus überführt. Innerhalb des Blocks 3 wird in dem Block 4 aus den Daten des Blocks 2 erstmalig das Referenzmodell ermittelt. Aufgrund des großen Abstands zu dem Zielobjekt ist die Qualität des Referenzmodells verrauscht. Aufgrund der beschränkten Rechenkapazität wird das Referenzmodell zudem in seiner Anzahl von Messwerten beschränkt. In Block 5 wird das Referenzmodell auf eine aktuell erfasste Punktwolke (Tracking Scan) angewendet. in Block 6 wird der auf das Referenzmodell angepasste Tracking Scan dem ICP-Algorithmus zur Ermittlung von Positionsinformationen des Zielobjekts unterworfen. Die ermittelten Positionsinformationen werden in Block 7 laufend aktualisiert einem GNC-System zur Verfügung gestellt. Der Block 6 stellt iterativ die aktuellen Positionsinformationen dem Block 3 zur Verfeinerung des Referenzmodells zur Verfügung.

### Bezugszeichenliste

- 1: Blockschaltbild
- 2: Block
- 3: Block
- 4: Block
- 5: Block
- 6: Block
- 7: Block

## Patentansprüche

1. Verfahren zur Erfassung und autonomen Verfolgung eines Zielobjekts, insbesondere eines nicht kooperativen Raumflugkörpers mittels eines LIDAR-Sensors, wobei der LIDAR-Sensor auf das Zielobjekt über einen vorgegebenen Flächenbereich laufend Laserpulse aussendet und aus von den Zielobjekten reflektierten Messpunkten in vorgegebenen Zeitabständen eine 3D-Punktwolke generiert und eine aktuelle relative Lage des Zielobjekts gegenüber dem LIDAR-Sensor in den vorgegebenen Zeitabständen anhand von die Position abschätzenden iterative Closest Point Algorithmen für sechs Bewegungsfreiheitsgrade des Zielobjekts berechnet wird, **dadurch gekennzeichnet, dass** in einem ersten Schritt eine hochauflösende, über mehrere vorgegebene Zeitabstände erfasste initialisierende Punktwolke erfasst wird, in einem zweiten Schritt aus der initialisierenden Punktwolke vom LIDAR-Sensor während eines Anfluges eines Raumflugkörpers mit dem LIDAR-Sensor an das Zielobjekt erstmalig ein verrauschtes Referenzmodell des Zielobjekts mit einer geringen Anzahl von Messpunkten erzeugt wird und in nachfolgenden iterativen Schritten zu den gegebenen Zeitabständen zeitliche Punktwolken ermittelt werden und mit dem erzeugten Referenzmodell anhand der Iterative Closest Point Algorithmen verglichen und auf Basis eines Punkt-zu-Punkt Korrespondenzverfahrens Lageinformationen des Zielobjekts berechnet werden, wobei das Referenzmodell laufend an die Änderungen der nachfolgend iterativ ermittelten Punktwolken adaptiert wird.

2. Verfahren nach Anspruch 1, **dadurch gekennzeichnet, dass** das Verfahren bei Entfernungen zwischen Zielobjekt und LIDAR-Sensor größer 50 m angewendet wird.

3. Verfahren nach Anspruch 1 oder 2, **dadurch gekennzeichnet, dass** die vorgegebenen Zeitabstände 0,5 Sekunden bis 1 Sekunde betragen.

4. Verfahren nach einem der Ansprüche 1 bis 3, **dadurch gekennzeichnet, dass** aus den bei unterschiedlichen Ansichten erfassten Punktwolken oder aus dem an diese angepassten Referenzmodell ein 3D-Modell des Zielobjekts ermittelt wird.

5. Verfahren nach Anspruch 4, **dadurch gekennzeichnet, dass** eine Generierung des 3D-Modells mittels einer elliptischen Annäherung des Raumflugkörpers mit dem LIDAR-Sensor an das Zielobjekt erfolgt.

## Claims

1. Method for detecting and autonomously tracking a target object, in particular a non-cooperative spacecraft, by means of a LIDAR sensor, wherein the LIDAR sensor continuously emits laser pulses to the target object over a predetermined area, and a 3D point cloud is generated from measurement points reflected from the target objects at predetermined time intervals, and a current relative position of the target object with respect to the LIDAR sensor is calculated at the predetermined time intervals using position-estimating iterative closest point algorithms for six degrees of freedom of movement of the target object, **characterised in that** in a first step, a high-resolution initialising point cloud recorded over a plurality of predetermined time intervals is recorded, in a second step, for the first time a noisy reference model of the target object with a small number of measurement points is generated from the initialising point cloud by the LIDAR sensor during an approach of a spacecraft with the LIDAR sensor to the target object, and in subsequent iterative steps, temporal position clouds are determined at the given time intervals and are compared with the generated reference model using the iterative closest point algorithms, and position information of the target object is calculated on the basis of a point-to-point correspondence method, wherein the reference model is continuously adapted to the changes in the subsequently iteratively determined point clouds.

2. Method according to claim 1, **characterised in that** the method is used for distances between the target object and LIDAR sensor greater than 50 m.

3. Method according to claim 1 or 2, **characterised in that** the predetermined time intervals are 0.5 seconds to 1 second.

4. Method according to any of claims 1 to 3, **characterised in that** a 3D model of the target object is determined from the point clouds recorded in different views or from the reference model adapted thereto.

5. Method according to claim 4, **characterised in that** the 3D model is generated by means of an elliptical approach of the spacecraft with the LIDAR sensor to the target object.

## Revendications

1. Procédé de détection et de suivi autonome d'un objet cible,
en particulier d'un engin spatial non coopératif au moyen d'un capteur LIDAR, le capteur LIDAR émettant en continu des impulsions laser sur l'objet cible sur une zone de surface prédéfinie et générant un nuage de points 3D à partir de points de mesure réfléchis par les objets cibles à des intervalles de temps prédéfinis et une position relative actuelle de l'objet cible par rapport au capteur LIDAR étant calculée dans les intervalles de temps prédéfinis à l'aide d'algorithmes itératifs de point le plus proche estimant la position pour six degrés de liberté de mouvement de l'objet cible, **caractérisé en ce que**, dans une première étape, un nuage de points initialisant à haute résolution, saisi sur plusieurs intervalles de temps prédéfinis, est saisi, dans une deuxième étape, un modèle de référence bruité de l'objet cible avec un petit nombre de points de mesure est généré pour la première fois à partir du nuage de points initialisant par le capteur LIDAR pendant une approche d'un engin spatial avec le capteur LIDAR vers l'objet cible et, dans des étapes itératives suivantes, des nuages de points temporels sont déterminés pour les intervalles de temps donnés et comparés avec le modèle de référence généré à l'aide des algorithmes itératifs de point le plus proche et des informations de position de l'objet cible sont calculées sur la base d'un procédé de correspondance point par point, le modèle de référence étant adapté en permanence aux modifications des nuages de points déterminés par la suite de manière itérative.

2. Procédé selon la revendication 1, **caractérisé en ce que** le procédé est appliqué pour des distances entre l'objet cible et le capteur LIDAR supérieures à 50 m.

3. Procédé selon la revendication 1 ou 2, **caractérisé en ce que** les intervalles de temps prédéfinis sont de 0,5 seconde à 1 seconde.

4. Procédé selon l'une des revendications 1 à 3, **caractérisé en ce qu'**un modèle 3D de l'objet cible est déterminé à partir des nuages de points saisis pour différentes vues ou à partir du modèle de référence adapté à ces nuages.

5. Procédé selon la revendication 4, **caractérisé en ce qu'**une génération du modèle 3D est effectuée au moyen d'une approche elliptique de l'objet cible par l'engin spatial avec le capteur LIDAR.
